# EUROPEAN PATENT SPECIFICATION

(11) **EP 2 113 703 B1**
(45) Date of publication and mention of the grant of the patent: **27.06.2018**
(21) Application number: 09004822.4
(22) Date of filing: 01.04.2009
(51) Int. Cl.: F16L 21/02, F16L 21/035, F16L 25/14

(54) **High pressure tube seal**
Hochdruckrohrdichtung
Scellage de tube haute pression

(30) Priority: 28.04.2008 US 110812
(43) Date of publication of application: 04.11.2009
(73) Proprietor: Carl Freudenberg KG, 69469 Weinheim (DE)
(72) Inventor: Smith, Timothy T., Indianapolis, IN 46239 (US); Seaborn, David M., Fishers, IN 46037 (US)

(56) References cited:
- EP-A1- 1 209 402
- WO-A2-2007/145779
- DE-U1- 8 629 175
- US-A- 3 501 158
- US-A- 4 531 711
- US-A- 4 553 759

## Description

### FIELD

The present disclosure relates to tube seals, and more particularly to a high pressure tube seal.

### BACKGROUND AND SUMMARY

The statements in this section merely provide background information related to the present disclosure and may not constitute prior art.

Historically, the standard method of sealing two joints not directly connected to each other has been to use a tube with an o-ring at each end. This design has been found to have two main deficiencies; the first being the seal's inability to compensate for offset between the two bores and the second being various assembly issues including missing o-rings, cut o-rings, and rolled o-rings.

An improvement to this sealing solution was patented in Europe (DE19548249C2 and DE19902953A1) by FDS Reichelsheim by directly molding rubber to an adhesive covered tube. This technique allowed for large seal beads to be incorporated into the design which would allow for misalignment in the application as well as the elimination of the majority of assembly issues found with the tube and o-ring design.

WO 2007/145779 A2 discloses tube seals for connecting two components. An elastomeric seal body is molded to a rigid cylindrical or conical tube. The seal body includes seal bead portions at the ends. Current design tube seals are subject to failure due to extrusion at high pressures. The present disclosure provides a tube seal, including a rigid cylindrical tube; an elastomeric seal body molded to an outer surface of the cylindrical tube, the elastomeric seal body including a pair of raised seal bead portions at opposite ends of the seal body and a pair of recessed groove portions adjacent to the pair of raised seal bead portions. A pair of anti-extrusion rings are disposed in the recessed groove portions.

The present invention relates to a tube seal, comprising a rigid cylindrical tube and an elastomeric seal body molded to an outer surface of said cylindrical tube, wherein said elastomeric seal body includes a pair of raised seal bead portions at opposite ends of said seal body and a pair of recessed groove portions adjacent to said pair of raised seal bead portions and a pair of anti-extrusion rings disposed in said recessed groove portions.

An example of such a tube seal is shown in US 4,531,711. The seal body of this tube seal is made of a resilient material like PTFE.

An other example of a tube seal is shown in US 4,553,759. This seal comprises a generally conical shaped rigid insert.

Further areas of applicability will become apparent from the description provided herein. It should be understood that the description and specific examples are intended for purposes of illustration only and are not intended to limit the scope of the present disclosure.

### DRAWINGS

The drawings described herein are for illustration purposes only and are not intended to limit the scope of the present disclosure in any way.
Figure 1 is a cross-sectional view of a tube seal for connecting between two-members according to the principles of the present disclosure;
Figure 2 is a cross-sectional view of a portion of a tube seal according to the principles of the present disclosure;
Figure 3 is a perspective view of the tube seal portion shown in Figure 2;
Figure 4 is a cross-sectional view of a tube seal for connecting between two-members, illustrating the tube seal in an misalignment position;
Figure 5 is a schematic view of a connection joint for the anti-extrusion rings;
Figure 6 is a schematic view of the connection joint of Figure 5 shown in a disconnected position;
Figure 7 is a schematic view of an alternative connection joint for the anti-extrusion rings; and
Figure 8 is a cross-sectional view of a diameter reducing tube seal for connecting between two members.

### DETAILED DESCRIPTION

The following description is merely exemplary in nature and is not intended to limit the present disclosure, application, or uses. It should be understood that throughout the drawings, corresponding reference numerals indicate like or corresponding parts and features.

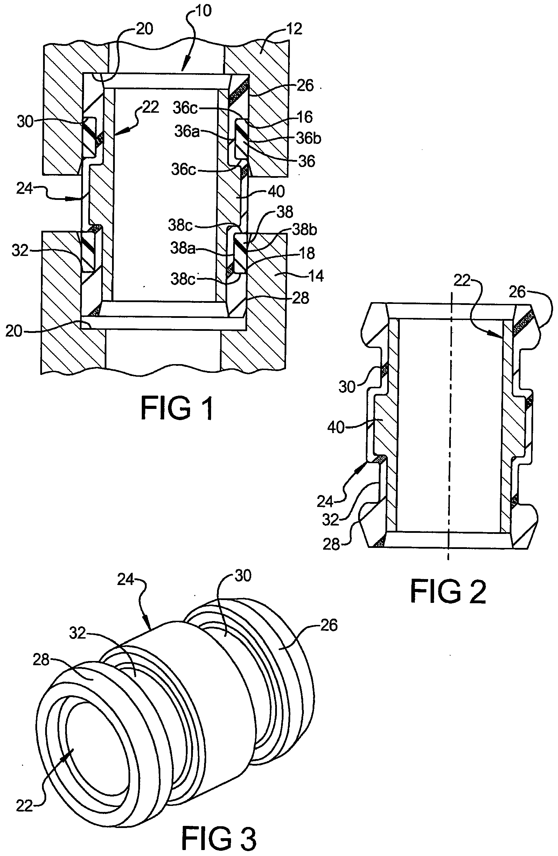

With reference to Figure 1, a tube seal 10 is shown providing a seal connection between a first tube member 12 and a second tube member 14. First tube member 12 can include an interior surface 16 and second tube member 14 can include an interior surface 18 and each tube member 12, 14 can include a shoulder portion 20 extending radially inward from surfaces 16, 18, respectively. The tube seal 10 sealingly engages against interior surfaces 16 and 18 of first and second tube members 12, 14.

The tube seal 10 can include a rigid cylindrical tube 22 and an elastomeric seal body 24 molded to an outer surface of the cylindrical tube 22. The elastomeric seal body includes a pair of raised seal bead portions 26, 28 at opposite ends of the seal body 24 and a pair of recessed groove portions 30, 32, adjacent to the pair of raised seal bead portions 26, 28. A pair of anti-extrusion rings 36, 38 are disposed in the recessed groove portions 30, 32.

The rigid cylindrical tube 22 includes a radially outwardly extending annular portion 40 disposed between the pair of recessed groove portions 30, 32 of the elastomeric seal body 24. The outwardly extending annular portion 40 has an outer diameter preferably larger than an inner diameter of the pair of anti-extrusion rings 36, 38. The outwardly extending annular portion 40 of the cylindrical tube can be optionally overmolded with the elastomeric seal body. The anti-extrusion rings 36, 38 can include generally cylindrical inner and outer surfaces 36a, 38a; 36b, 38b, respectively, as well as generally planar opposite face surfaces 36c, 38c.

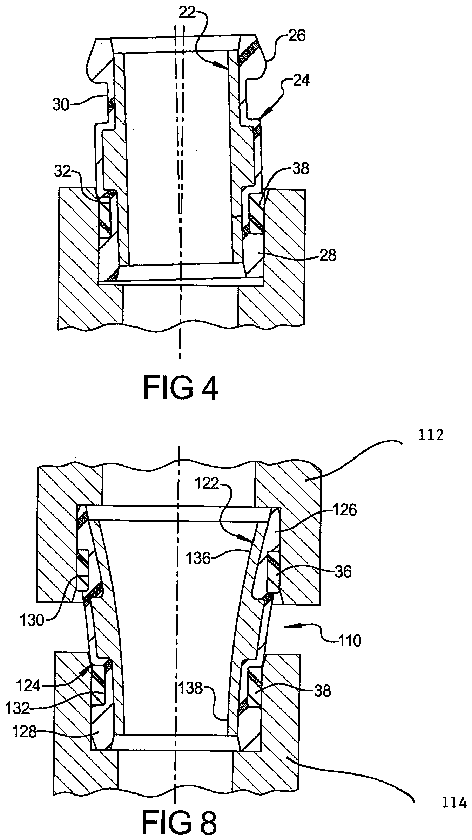

The tube seal 10 with anti-extrusion rings 36, 38 can accommodate for misalignment of the interior surfaces or bores 16, 18 of tube members 12, 14. As illustrated in Figure 4, the tube seal 10 can be inserted with an axial misalignment by an angle *α*. The anti-extrusion rings 36, 38 can be provided with a clearance between the inner diameter 36a and the seal groove outer diameter and a clearance between the outer diameter 36b and the bore diameter to allow angular misalignment. The amount of clearance can dictate the amount of angular misalignment that can be accommodated. The clearances also provide seal bead extrusion resistance under high pressure. The bore diameter is protected from damage due to fretting or scratching and noise created from seal to bore interference due to vibrational influence is also eliminated.

As shown in Figure 8, the tube seal 110 with anti-extrusion rings 36, 38 can be utilized in a diameter reducing tube seal application. The diameter reducing tube seal 110 includes a generally conically shaped rigid insert 122 and an elastomeric seal body 124 molded to an outer surface of the rigid conical insert 122. It should be understood that by "generally conically shaped," it is meant that the insert 122 can have curved walls or stepped walls, as shown, or can have straight walls.

The metal conical insert 122 includes a first opening 136 at a first end and a second opening 138 at a second end, the first opening 136 is larger in diameter than the second opening 138. The elastomeric seal body 124 is molded to the rigid insert 122 so as to create a mechanical connection therebetween. The elastomeric seal body 124 includes annular raised bead portions 126, 128 which, as shown in Figure 8, are shown received in the end portions of tubular members 112, 114 which are of different diameters. The elastomeric seal body 124 includes a pair of recessed groove portions 130, 132 adjacent to the pair of raised bead portions 126, 128. A pair of anti-extrusion rings 36, 38 are disposed in the recessed groove portions 130, 132.

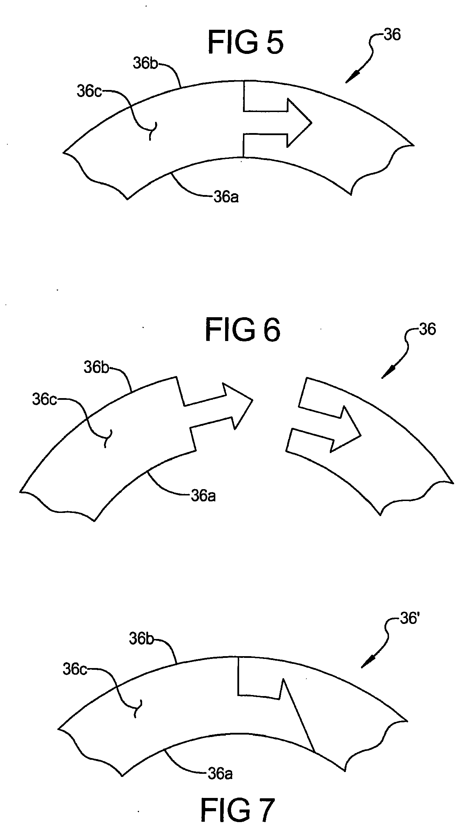

The anti-extrusion rings 36, 38 can include split rings such as, for example, scarf cut or butt cut rings, or locking split rings as illustrated in Figures 5-7. Although the locking split rings are shown in Figures 5-7 for exemplary purposes only, other configurations of locking or unlocking split rings can be utilized. The use of split cut rings for anti-extrusion rings 36, 38 helps to facilitate assembly of the anti-extrusion rings 36, 38 on the seal assembly 10-However, it is contemplated that other anti-extrusion rings could be utilized. Further, the ends of the rings 36, 38 could be joined by adhesives or by sonic welding or other joining techniques. The anti-extrusion rings 36, 38 can be made from any rigid material including, but not limited to, thermoplastics, thermoset plastics, PTFE, metal, ceramic, or other reinforced materials.

By way of non-limiting example, the high pressure seal of the present disclosure was tested utilizing anti-extrusion rings 36, 38 which were made from Troylon® and compared to current production seals which do not include the anti-extrusion rings disclosed herein. The seals were tested on a hydraulic test stand and were subjected to a static pressure and a pressure pulse ramp at room temperature. To establish a baseline, three current production seals were tested with an 8.4 millimeter extrusion gap, applying incremental 1 bar pressure steps until leakage. Under continuous pressure, the three production seals leaked at 24, 26, and 32 bar.

A high pressure seal according to the present disclosure was then tested at room temperature with an 8.4 millimeter extrusion gap. Initially, a 14 bar continuous pressure was initially applied and was then increased by approximately 3 bar every ten seconds. The pressure was increased to 106 bar and held for one hour before shut down with no leakage present. The same seal was then re-tested with pressure pulsation from 3 bar to 106 bar (five seconds each step). After fifteen minutes at room temperature, the temperature was ramped to 150°C at approximately 100°C, extrusion of the anti-extrusion ring was observed. The testing was stopped and the seal was removed. The backup ring was permanently distorted, however, no damage was evident on the seal and no fluid leakage was evident before the testing was stopped.

A second seal was tested under the same pressure, pulse, and temperature ramp conditions. Backup ring extrusion at the bore was noted at approximately the same temperature. Seal shift during the pressure pulsing compressed the seal on one end and opened the extrusion gap on the other side, reducing radial support of the backup ring. However, no fluid leakage or seal damage was observed.

A third seal was then tested with the gap between the bores reduced from 8.4 millimeters to 6.35 millimeters. The backup ring extrusion was noted at 120°C. Again, no fluid leakage or seal damage was observed. As designed, the high pressure seal of the present disclosure out-performed the current production tube seal design by at least four times at room temperature. Although sufficient at room temperature, the backup ring material softens with increased temperature to the point of extrusion. Subsequent part testing using a reinforced backup ring material enabled the seal to maintain a 207 bar pressure pulsation at room temperature. Elevated temperature testing at 150°C resulted in the seal being able to hold 69 bar pulsations indefinitely while holding intermittent peak pressures of 138 bar. Clearly, the high pressure tube seal has been proven to achieve significantly higher pressures than current production designs.

The analytical testing has proven the functional advantage of the anti-extrusion features over the current production designs under high pressure conditions and with the use of alternative materials and through further testing, it is expected that further improved results can be achieved.

## Claims

1. A tube seal (10), comprising a rigid cylindrical tube (22); an elastomeric seal body (24) molded to an outer surface of said cylindrical tube (22), said elastomeric seal body (24) including a pair of raised seal bead portions (26, 28) at opposite ends of said seal body (24) and a pair of recessed groove portions (30, 32) adjacent to said pair of raised seal bead portions (26, 28); and a pair of anti-extrusion rings (36, 38) disposed in said recessed groove portions (30, 32); **characterized in that** said cylindrical tube (22) includes a radially outwardly extending annular portion (40) disposed between said pair of recessed groove portions (30, 32) of said elastomeric seal body (24).

2. The tube seal according to claim 1, wherein said pair of anti-extrusion rings are made from a plastic material.

3. The tube seal according to one of the claims 1 or 2, wherein said anti-extrusion rings (36, 38) are split rings.

4. The tube seal according to one of the claims 1 to 3, wherein said anti-extrusion rings (36, 38) include a generally cylindrical inner surface (36a, 38a) and a generally cylindrical outer surface (36b, 38b).

5. The tube seal according to claim 4, wherein a clearance is provided between said generally cylindrical inner surface (36a, 38a) and an outer diameter of said recessed groove portions (30, 32).

6. The tube seal according one of the claims 1 to 5, wherein said raised seal bead portions (26, 28) have a larger diameter than said generally cylindrical outer surface (36b, 38b) of said anti-extrusion ring (36, 38) received in an adjacent recessed groove portion (30, 32).

7. The tube seal according to of the claims 1 to 6, wherein said anti-extrusion rings (36, 38) include generally planar side surfaces (36c, 38c).

8. A tube seal (10) comprising a generally conically shaped rigid insert (122); an elastomeric seal body (124) molded to an outer surface of said generally conically shaped rigid insert (122), said elastomeric seal body (124) including a pair of raised seal bead portions (126, 128) at opposite ends of said seal body (124), and a pair of recessed groove portions (130, 132) adjacent to said pair of raised seal bead portions (126, 128); and a pair of anti-extrusion rings (36, 38) disposed in said recessed groove portions (130, 132); **characterized in that** said cylindrical tube (22) includes a radially outwardly extending annular portion (40) disposed between said pair of recessed groove portions (30, 32) of said elastomeric seal body (24).

9. The tube seal according to claim 8, wherein said pair of anti-extrusion rings (36, 38) are made from a plastic material.

10. The tube seal according to one of the claims 8 or 9, wherein said anti-extrusion rings (36, 38) are split rings.

11. The tube seal according to one of the claims 8 to 10, wherein said anti-extrusion rings (36, 38) include a generally cylindrical inner surface (36a, 38a) and a generally cylindrical outer surface (36b, 38b).

12. The tube seal according to claim 11, wherein a clearance is provided between said generally cylindrical inner surface (36a, 38a) and an outer diameter of said recessed groove portions (130, 132).

13. The tube seal according to one of the claims 8 to 12, wherein said raised seal bead portions (126, 128) have a larger diameter than said generally cylindrical outer surface (36b, 38b) of said anti-extrusion ring (36, 38) received in an adjacent recessed groove portion (130, 132).

14. The tube seal according to of one of the claims 8 to 13, wherein said anti-extrusion rings (36, 38) include generally planar side surfaces (36c, 38c).

## Patentansprüche

1. Rohrdichtung (10), umfassend: ein starres zylindrisches Rohr (22); einen elastomeren Dichtungskörper (24), der passend zu einer äußeren Oberfläche des zylindrischen Rohrs (22) ausgeformt ist, wobei der elastomere Dichtungskörper (24) ein Paar erhabener Dichtungswulstabschnitte (26, 28) an entgegengesetzten Enden des Dichtungskörpers (24) sowie ein Paar vertiefter Nutabschnitte (30, 32) angrenzend an das Paar erhabener Dichtungswulstabschnitte (26, 28) beinhaltet; und ein Paar Antiextrusionsringe (36, 38), die sich in den vertieften Nutabschnitten (30, 32) befinden;
**dadurch gekennzeichnet, dass**
das zylindrische Rohr (22) einen sich radial nach außen erstreckenden ringförmigen Abschnitt (40) beinhaltet, der sich zwischen dem Paar vertiefter Nutabschnitte (30, 32) des elastomeren Dichtungskörpers (24) befindet.

2. Rohrdichtung nach Anspruch 1, wobei das Paar Antiextrusionsringe aus einem Kunststoffmaterial besteht.

3. Rohrdichtung nach einem der Ansprüche 1 oder 2, wobei die Antiextrusionsringe (36, 38) Spaltringe sind.

4. Rohrdichtung nach einem der Ansprüche 1 bis 3, wobei die Antiextrusionsringe (36, 38) eine allgemein zylindrische innere Oberfläche (36a, 38a) und eine allgemein zylindrische äußere Oberfläche (36b, 38b) beinhalten.

5. Rohrdichtung nach Anspruch 4, wobei ein Abstand zwischen der allgemein zylindrischen inneren Oberfläche (36a, 38a) und einem Außendurchmesser der vertieften Nutabschnitte (30, 32) vorgesehen ist.

6. Rohrdichtung nach einem der Ansprüche 1 bis 5, wobei die erhabenen Dichtungswulstabschnitte (26, 28) einen größeren Durchmesser als die allgemein zylindrische äußere Oberfläche (36b, 38b) des in einem angrenzenden vertieften Nutabschnitt (30, 32) aufgenommenen Antiextrusionsring (36, 38) hat.

7. Rohrdichtung nach Anspruch 1 bis 6, wobei die Antiextrusionsringe (36, 38) allgemein planare Seitenoberflächen (36c, 38c) beinhalten.

8. Rohrdichtung (10), umfassend: einen allgemein konisch geformten starren Einsatz (122); einen elastomeren Dichtungskörper (124), der passend zu einer äußeren Oberfläche des allgemein konisch geformten starren Einsatzes (122) ausgeformt ist, wobei der elastomere Dichtungskörper (124) ein Paar erhabener Dichtungswulstabschnitte (126, 128) an entgegengesetzten Enden des Dichtungskörpers (124) sowie ein Paar vertiefter Nutabschnitte (130, 132) angrenzend an das Paar erhabener Dichtungswulstabschnitte (126, 128) beinhaltet; und ein Paar Antiextrusionsringe (36, 38), die sich in den vertieften Nutabschnitten (130, 132) befinden;
**dadurch gekennzeichnet, dass**
das zylindrische Rohr (22) einen sich radial nach außen erstreckenden ringförmigen Abschnitt (40) beinhaltet, der sich zwischen dem Paar vertiefter Nutabschnitte (30, 32) des elastomeren Dichtungskörpers (24) befindet.

9. Rohrdichtung nach Anspruch 8, wobei das Paar Antiextrusionsringe (36, 38) aus einem Kunststoffmaterial besteht.

10. Rohrdichtung nach einem der Ansprüche 8 oder 9, wobei die Antiextrusionsringe (36, 38) Spaltringe sind.

11. Rohrdichtung nach einem der Ansprüche 8 bis 10, wobei die Antiextrusionsringe (36, 38) eine allgemein zylindrische innere Oberfläche (36a, 38a) und eine allgemein zylindrische äußere Oberfläche (36b, 38b) beinhalten.

12. Rohrdichtung nach Anspruch 11, wobei ein Abstand zwischen der allgemein zylindrischen inneren Oberfläche (36a, 38a) und einem Außendurchmesser der vertieften Nutabschnitte (130, 132) vorgesehen ist.

13. Rohrdichtung nach einem der Ansprüche 8 bis 12, wobei die erhabenen Dichtungswulstabschnitte (126, 128) einen größeren Durchmesser als die allgemein zylindrische äußere Oberfläche (36b, 38b) der in einem angrenzenden vertieften Nutabschnitt (130, 132) aufgenommenen Antiextrusionsringe (36, 38) haben.

14. Rohrdichtung nach einem der Ansprüche 8 bis 13, wobei die Antiextrusionsringe (36, 38) allgemein planare Seitenoberflächen (36c, 38c) beinhalten.

## Revendications

1. Scellage de tube (10), comprenant un tube cylindrique rigide (22); un corps de scellage élastomère (24) moulé sur une surface extérieure dudit tube cylindrique (22), ledit corps de scellage élastomère (24) comprenant une paire de parties de bourrelet de scellage surélevées (26, 28) à des extrémités opposées dudit corps de scellage (24) et une paire de parties de rainure évidées (30, 32) adjacentes à ladite paire de parties de bourrelet de scellage surélevées (26, 28); et une paire d'anneaux anti-extrusion (36, 38) disposés dans lesdites parties de rainure évidées (30, 32); **caractérisé en ce que** ledit tube cylindrique (22) comprend une partie annulaire s'étendant radialement vers l''extérieur (40) qui est disposée entre ladite paire de parties de rainure évidées (30, 32) dudit corps de scellage élastomère (24).

2. Scellage de tube selon la revendication 1, dans lequel ladite paire d'anneaux anti-extrusion sont constitués d'une matière plastique.

3. Scellage de tube selon l'une des revendications 1 ou 2, dans lequel lesdits anneaux anti-extrusion (36, 38) sont des anneaux fendus.

4. Scellage de tube selon l'une des revendications 1 à 3, dans lequel lesdits anneaux anti-extrusion (36, 38) présentent une surface intérieure essentiellement cylindrique (36a, 38a) et une surface extérieure essentiellement cylindrique (36b, 38b).

5. Scellage de tube selon la revendication 4, dans lequel un jeu est prévu entre ladite surface intérieure essentiellement cylindrique (36a, 38a) et un diamètre extérieur desdites parties de rainure évidées (30, 32).

6. Scellage de tube selon l'une des revendications 1 à 5, dans lequel lesdites parties de bourrelet de scellage surélevées (26, 28) présentent un diamètre plus grand que ladite surface extérieure essentiellement cylindrique (36b, 38b) dudit anneau anti-extrusion (36, 38) reçu dans une partie de rainure évidée adjacente (30, 32).

7. Scellage de tube selon l'une des revendications 1 à 6, dans lequel lesdits anneaux anti-extrusion (36, 38) présentent des surfaces latérales essentiellement planes (36c, 38c).

8. Scellage de tube (10) comprenant un insert rigide de forme essentiellement conique (122); un corps de scellage élastomère (124) moulé sur une surface extérieure dudit insert rigide de forme essentiellement conique (122), ledit corps de scellage élastomère (124) comprenant une paire de parties de bourrelet de scellage surélevées (126, 128) à des extrémités opposées dudit corps de sellage (124), et une paire de parties de rainure évidées (130, 132) adjacente à ladite paire de parties de bourrelet de scellage surélevées (126, 128); et une paire d'anneaux anti-extrusion (36, 38) disposés dans lesdites parties de rainure évidées (130, 132); **caractérisé en ce que** ledit tube cylindrique (22) comprend une partie annulaire s'étendant radialement vers l'extérieur (40) qui est disposée entre ladite paire de rainures évidées (30, 32) dudit corps de scellage élastomère (24).

9. Scellage de tube selon la revendication 8, dans lequel ladite paire d'anneaux anti-extrusion (36, 38) sont constitués d'une matière plastique.

10. Scellage de tube selon l'une des revendications 8 ou 9, dans lequel lesdits anneaux anti-extrusion (36, 38) sont des anneaux fendus.

11. Scellage de tube selon l'une des revendications 8 à 10, dans lequel lesdits anneaux anti-extrusion (36, 38) présentent une surface intérieure essentiellement cylindrique (36a, 38a) et une surface extérieure essentiellement cylindrique (36b, 38b).

12. Scellage de tube selon la revendication 11, dans lequel un jeu est prévu entre ladite surface intérieure essentiellement cylindrique (36a, 38a) et un diamètre extérieur desdites parties de rainure évidées (130, 132).

13. Scellage de tube selon l'une des revendications 8 à 12, dans lequel lesdites parties de bourrelet de scellage surélevées (126, 128) présentent un diamètre plus grand que ladite surface extérieure essentiellement cylindrique (36b, 38b) dudit anneau anti-extrusion (36, 38) reçu dans une partie de rainure évidée adjacente (130, 132).

14. Scellage de tube selon l'une des revendications 8 à 13, dans lequel lesdits anneaux anti-extrusion (36, 38) présentent des surfaces latérales essentiellement planes (36c, 38c).
